# FASCICULE DE BREVET EUROPEEN

(11) **EP 1 302 677 B1**
(45) Date de publication et mention de la délivrance du brevet: **17.08.2005**
(21) Numéro de dépôt: 02292505.1
(22) Date de dépôt: 11.10.2002
(51) Int. Cl.: F16B 19/10

(54) **Dispositif de fixation**
Befestigungsvorrichtung
Fixing device

(30) Priorité: 12.10.2001 FR 0113165
(43) Date de publication de la demande: 16.04.2003
(73) Titulaire: Renault s.a.s., 92100 Boulogne Billancourt (FR)
(72) Inventeur: Mencarelli, Franck, 78180 Montigny le Bretonneux (FR)

(56) Documents cités:
- FR-A- 2 308 006
- GB-A- 1 149 184
- US-A- 3 406 431
- US-A- 4 527 822

## Description

La présente invention concerne les dispositifs de fixation et plus particulièrement un dispositif de fixation comportant une partie pouvant se dilater dans un orifice de réception afin de maintenir en position un élément, par exemple un capteur de reconnaissance de course d'une pédale automobile.

Les dispositifs de fixation de ce type présentent l'avantage de fournir un effort de serrage convenable pour un encombrement, un coût et des contraintes de montage moindres. Ainsi, selon une conception connue, des rivets sont formés de deux parties, un réceptacle dans lequel est inséré un axe, ledit axe présentant une excroissance à son extrémité qui écarte progressivement les parois du réceptacle, et donc réalise un effort de serrage dans le trou de fixation, au fur et à mesure de l'enfoncement de l'axe dans le réceptacle. Ces moyens de fixation présentent entre autres l'inconvénient majeur de ne pas offrir un démontage aisé. Dans certains cas, le démontage ne peut être effectué sans la destruction de la pièce.

Tel que décrit dans la publication GB-A-2305961, le démontage du dispositif nécessite l'utilisation d'outil et pose donc le problème de l'accessibilité pour le démontage. Ainsi, dans le cas d'un démontage en aveugle, l'utilisateur va devoir se contorsionner pour utiliser son outil propre au démontage, ou bien posséder un outillage particulier. Ces inconvénients présentent un coût et une perte de temps. De plus, de tels dispositifs présentent le risque de procéder à un montage non sécurisé dans le cas où l'enfoncement en aveugle de l'axe est insuffisant pour enclencher son verrouillage.

De même le document FR-2308006 décrit des attaches dans lesquelles une poignée est munie de moyens d'interconnexions amovibles destinés à fixer la poignée sur la tête. Un tel dispositif ne procure pas un montage sécurisé lorsque l'opérateur veut verrouiller ou déverrouiller l'axe en positionnant la poignée en aveugle.

Le document US-4527822 décrit un dispositif de fixation d'un toit ouvrant sur la caisse. Un levier, indépendant de l'arbre, est nécessaire pour verrouiller ou déverrouiller l'axe. De la même façon, un levier amovible ne facilite pas la manipulation du dispositif par un opérateur qui travaille en aveugle.

La présente invention se propose de résoudre ces problème en proposant un système de montage et démontage rapide, sans recourir à un quelconque outillage, et permettant également une sécurisation de la fixation.

A cet effet, l'invention a pour objet un boîtier avec dispositif de fixation, du type comportant un fourreau constitué d'au moins deux extensions séparées par une rainure, un arbre dont la rotation fait varier l'expansion du fourreau la rotation de l'arbre étant effectuée par l'intermédiaire d'un levier solidaire de l'arbre.

Ce dispositif est caractérisé en ce que le dispositif de fixation comporte un moyen de verrouillage solidaire dudit boîtier.

Selon une caractéristique de la présente invention, le dispositif de fixation coopère avec une zone de fixation, formée d'un élément plan solidaire du boîtier possède un alésage dont le diamètre est égal au diamètre extérieur au repos du fourreau.

Selon une caractéristique de la présente invention, le diamètre de l'alésage présente au moins deux ergots susceptibles de coopérer avec la rainure.

Selon une caractéristique de la présente invention, la zone de fixation possède au moins une patte de fixation présentant un crochet.

Selon une caractéristique de la présente invention, la zone de fixation possède au moins une patte de maintien sans crochet.

Selon une caractéristique de la présente invention, l'arbre possède une came.

Selon une caractéristique de la présente invention, la rainure a une profondeur p supérieure à l'épaisseur e de la came.

Selon une caractéristique de la présente invention, une extrémité de l'arbre forme un embout, de forme tronconique en retrait duquel a été usinée une gorge d'arrêt, la paroi commune à ladite gorge et à l'embout formant une surface plane d'appui.

Selon une caractéristique de la présente invention, l'arbre présente une section de diamètre supérieur formant une rondelle d'appui.

Selon une caractéristique de la présente invention, les extensions du fourreau sont portées par une base.

Selon une caractéristique de la présente invention, la rainure s'étend longitudinalement de la base à l'extrémité des extensions opposée à ladite base.

Selon une caractéristique de la présente invention, chaque extension possède en son extrémité opposée à la base une lèvre s'étendant radialement.

Selon une caractéristique de la présente invention, au moins un crochet peut coopérer avec une rainure de retenue formée par la base et la rondelle d'appui.

Selon une caractéristique de la présente invention, la surface extérieure des extensions présente des nervures axiales.

Selon une caractéristique de la présente invention, le levier possède un ergot susceptible de coopérer avec le moyen de verrouillage.

Selon une caractéristique de la présente invention, le moyen de verrouillage est solidaire du boîtier.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective du dispositif de fixation selon l'invention, monté sur un boitier contenant un capteur.
- la figure 2 est une vue en coupe du dispositif de fixation selon l'invention.
- la figure 3 est une vue en coupe du dispositif de fixation selon l'invention, en position de serrage.

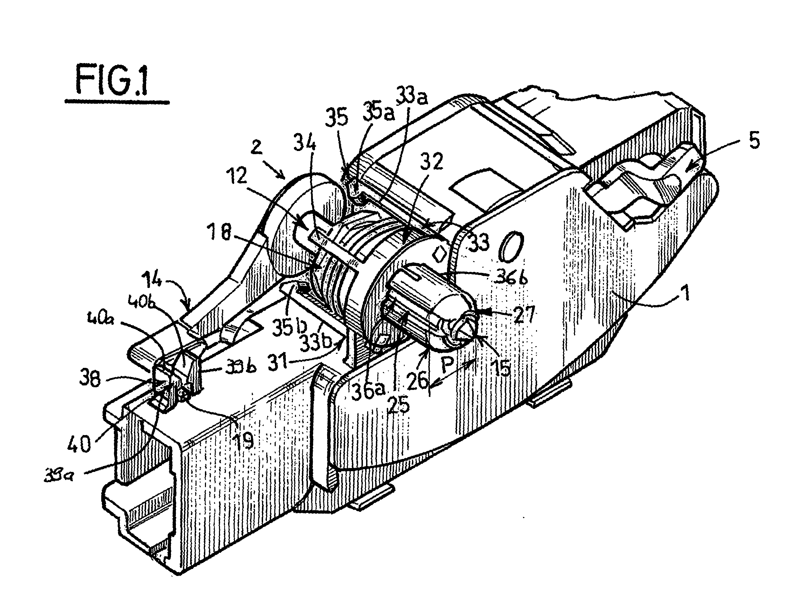

Selon la figure 1, un boîtier 1, contenant par exemple un capteur, est représenté muni d'un dispositif de fixation 2 composé d'un guidage 31, solidaire du boîtier 1, d'une commande de serrage 11 et d'un fourreau 21. Le capteur 1 est fixée sur un support 3 qui présente un trou de fixation 4 en regard duquel va être positionné le dispositif de fixation 2.

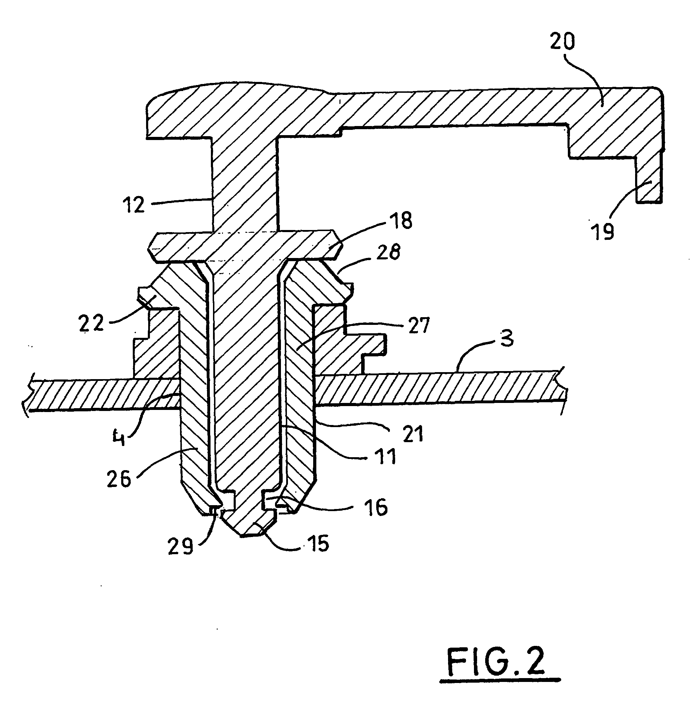

Tel que représenté à la figure 2, le dispositif de fixation 2 est constitué d'une commande de serrage 11, composée d'un arbre principal 12, dont une première extrémité porte un levier 14. A une seconde extrémité de l'arbre 12, se trouve un embout 15, de forme tronconique en retrait duquel a été usinée une gorge d'arrêt 16. La paroi commune à ladite gorge 16 et à l'embout 15 forme une surface plane d'appui. Une came 17 présentant deux ailettes 17a, 17b est située sur le pourtour de l'arbre 12, lesdites ailettes 17a et 17b étant diamétralement opposées.

Une section de l'arbre 12, d'un diamètre supérieur à celui de l'arbre 12, forme une rondelle d'appui 18.

Le levier 14 possède en son extrémité libre une zone de préhension 20 et un ergot 19 s'étendant dans une direction parallèle à l'axe de l'arbre 12. Cette disposition n'est pas restrictive de l'invention et il sera compris que l'ergot 19 peut s'étendre dans le prolongement du levier 14, perpendiculairement à l'axe de l'arbre 12, pour s'adapter à la configuration de la zone de montage du dispositif.

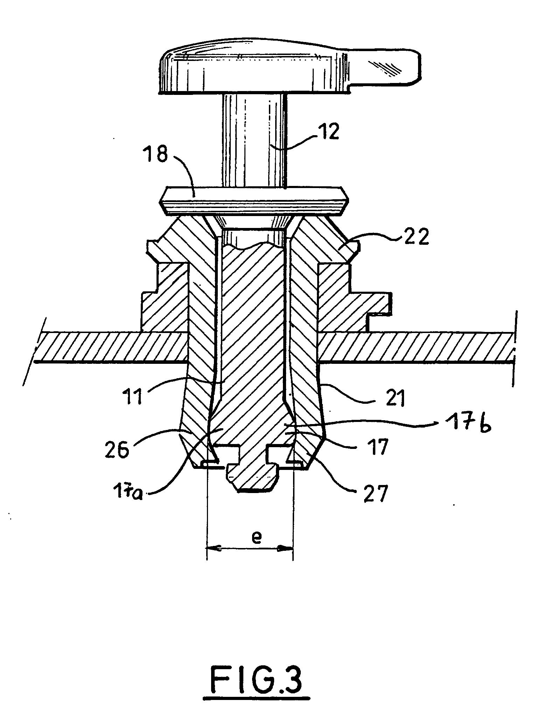

Comme représenté sur la figure 3, un fourreau 21 est constitué d'une base 22 qui se prolonge par deux extensions 26 et 27 espacées par une rainure 25, ladite rainure 25 se prolongeant d'une extrémité du fourreau 21 à une autre. Les extensions 26 et 27 forment ainsi les côtés d'une portion de cylindre à l'intérieur duquel a été réalisé un alésage concentrique. Chaque extension possède en une extrémité opposée à la base une lèvre 29 s'étendant radialement. Les diamètres intérieurs de la base 22 et du cylindre formé par les extensions 26 et 27 sont les mêmes, ce diamètre commun étant légèrement supérieur à celui de l'arbre principal 12 de la commande de serrage 11. La base 22 est un élément cylindrique dont la surface extérieure a un diamètre légèrement supérieur à celui de la rondelle d'appui 18 de la commande de serrage 11.

L'assemblage du fourreau 21 et de la commande de serrage 11 est réalisé par l'insertion de la came 17 dans la rainure 25, l'embout 15 de la commande de serrage 11 pénétrant préalablement dans le fourreau 21 par l'extrémité formée par la base 22.

La commande de serrage est insérée dans le fourreau 21 jusqu'à ce que la base 22 soit en butée de la rondelle d'appui 18. La forme tronconique de l'embout 15 permet au final de cette insertion la coopération des lèvres 29 et de la gorge d'arrêt 16. Le fourreau 21 est ainsi arrêté en translation par rapport à la commande de serrage 11.

L'arbre 12 de ladite commande 11 est lui, monté libre en rotation dans le fourreau 21. Lorsque ledit fourreau 21 est maintenu en rotation , la rotation de l'arbre 12 entraîne la rotation de la came 17 qui se déloge de la rainure 25 et procède ainsi à l'expansion du fourreau 21 en écartant les extensions 26 et 27. La position de la came 17 et son épaisseur dépendent alors de l'écartement souhaité des extensions du fourreau.

L'assemblage de la commande 11 et du fourreau 21 amène à un positionnement de la base 22 face à la rondelle d'appui 18. La base 22 présente un chanfrein 28 à 45°, tel que l'ensemble formé par la base 22 et la rondelle d'appui 18 forme une rainure de retenue.

Selon la figure 1 et la figure 3, une zone de fixation 31 est constituée d'un élément plan 32 solidaire du boîtier 1, sur lequel sont greffées deux pattes de fixation 33a, 33b et une patte de maintien 34. Les pattes de fixation 33a, 33b possèdent des crochets de fixation 35a, 35b situés à leur extrémité libre et sont situées sensiblement de part et d'autre du diamètre d'un alésage de l'élément plan 32. Dans notre exemple de réalisation, la patte de maintien 34 ne possède pas de crochet. L'alésage de l'élément plan 32 présente sur sa surface intérieure deux ergots 36a, 36b diamétralement opposées. Ces deux ergots 36a, 36b guident en translation l'ensemble formé par le fourreau 21 et la commande de serrage 11, et interdisent la rotation dudit fourreau 21 puisque le diamètre de l'alésage de l'élément plan 32 est le même que le diamètre extérieur de l'embout 21.

Le dispositif de fixation 2 se monte avantageusement sur le boîtier 1 de la manière suivante. La commande de serrage 11 et le fourreau 21 sont réunis dans un premier temps et l'ensemble réalisé est ensuite monté dans la zone de fixation 31, en faisant correspondre la rainure 25 du fourreau 21 et les ergots 36a, 36b de la zone de fixation 31. Le dispositif de fixation 2 ainsi formé possède deux positions de travail : La première position est obtenue lors de l'insertion de l'ensemble formé par la commande de serrage 11 et le fourreau 21 dans l'alésage de l'élément plan 32, lorsque les crochets 35a, 35b coopèrent avec la rainure de retenue existant entre la base 22 chanfreinée et la rondelle d'appui 18. Cette position de transport va faciliter un positionnement en aveugle du boîtier 1 en regard du trou de fixation 4. Avantageusement, le boîtier 1 est muni d'une patte de fixation 5 dont l'insertion dans un orifice complémentaire du support 3 permet un pré positionnement du boîtier 1 en regard du trou de fixation 4. Le positionnement définitif du boîtier 1 est obtenu lorsque l'extrémité de l'ensemble formé par le fourreau 21 et la commande de serrage 11 est en prise dans le trou de fixation 4. La seconde position de travail du dispositif de fixation 2 est alors obtenue par l'enfoncement de l'ensemble formé par le fourreau 21 et la commande de serrage 11 dans le trou de fixation jusqu'à ce que la base 22 soit en appui sur l'élément cylindrique 32 de la zone de fixation 31, un effort étant initialement fourni par l'utilisateur pour passer le point dur réalisé par les crochets de fixation 35a, 35b de la rainure de retenue. Une rotation du levier 14 permet alors de créer une expansion des extensions 26 et 27 du fourreau 21 par l'intermédiaire de la came 17 et de créer ainsi dans le trou de fixation 4 un effort de serrage.

L'effort de serrage est maintenu par le verrouillage du dispositif, réalisé par la mise en position de l'ergot 19 dans un clips de verrouillage 38 solidaire du boîtier 1, formé par deux pattes 39a, 39b qui présentent des bossages 40a et 40b situés à proximité de leur extrémité libre. Lesdits bossages 40a, 40b de chaque patte 39a, 39b sont disposés l'un face à l'autre et présentent un passage rétréci. La flexibilité des pattes 39a, 39b permet alors un clipsage ou un declipsage de l'ergot 19 sous la contrainte de l'utilisateur.

Le démontage de l'ensemble nécessite préalablement le déverrouillage du levier 14 par le clips 38. Il s'agit ensuite de procéder à une rotation de la came 17 par une action sur le levier 14, pour modifier l'expansion des extensions 26, 27, puis d'exercer une traction sur le levier 14 parallèlement à l'axe du trou de fixation 4 jusqu'à la butée réalisée par les crochets 35a, 35b des pattes de fixation 33a, 33b. La présence de la patte de maintien 34, sans crochet, permet un déclipsage facilité de l'ensemble formé par la commande de serrage 11 et le fourreau 21.

L'invention n'est nullement limitée au mode de réalisation décrit et illustré qui n'a été donné qu'à titre d'exemple.

## Revendications

1. Boîtier avec dispositif de fixation, le dispositif de fixation comportant un fourreau (21) constitué d'au moins deux extensions (26,27) séparées par une rainure (25), un arbre (12) dont la rotation fait varier l'expansion du fourreau (21) la rotation de l'arbre (12) étant effectuée par l'intermédiaire d'un levier (14) solidaire de l'arbre (12), **caractérisé en ce que** le dispositif de fixation comporte un moyen de verrouillage (38) solidaire dudit boîtier (1).

2. Boîtier avec dispositif de fixation selon la revendication 1, **caractérisé en ce que** le dispositif de fixation (1) coopère avec une zone de fixation (31), formée d'un élément plan (32) solidaire du boîtier (1) possède un alésage dont le diamètre est égal au diamètre extérieur au repos du fourreau (21).

3. Boîtier avec dispositif de fixation selon la revendication 2, **caractérisé en ce que** le diamètre de l'alésage de l'élément plan (32) présente au moins deux ergots (36a, 36b) susceptibles de coopérer avec la rainure (25).

4. Boîtier avec dispositif de fixation selon la revendication 2 ou 3, **caractérisé en ce que** la zone de fixation (31) possède au moins une patte de fixation (33) présentant un crochet (35).

5. Boîtier avec dispositif de fixation selon l'une des revendications 2 à 4, **caractérisé en ce que** la zone de fixation (31) possède au moins une patte de maintien (34).

6. Boîtier avec dispositif de fixation selon l'une des revendications précédentes, **caractérisé en ce que** l'arbre (12) possède une came (17).

7. Boîtier avec dispositif de fixation selon la revendication 6, **caractérisé en ce que** la rainure (25) a une profondeur (p) supérieure à l'épaisseur (e) de la came 17.

8. Boîtier avec dispositif de fixation selon l'une des revendications précédentes, **caractérisé en ce qu'**une extrémité de l'arbre (12) forme un embout (15), de forme tronconique en retrait duquel a été usinée une gorge d'arrêt (16), la paroi commune à ladite gorge (16) et à l'embout (15) formant une surface plane d'appui.

9. Boîtier avec dispositif de fixation selon l'une des revendications précédentes, **caractérisé en ce que** l'arbre (12) présente une section de diamètre supérieur formant une rondelle d'appui (18).

10. Boîtier avec dispositif de fixation selon l'une des revendications précédentes, **caractérisé en ce que** les extensions (26,27) du fourreau (21) sont portées par une base (22).

11. Boîtier avec dispositif de fixation selon la revendication 10, **caractérisé en ce que** la rainure (25) s'étend longitudinalement de la base (22) à l'extrémité libre des extensions.

12. Boîtier avec dispositif de fixation selon la revendication 10 ou 11, **caractérisé en ce que** chaque extension (26, 27) possède en son extrémité libre une lèvre (29) s'étendant radialement vers l'intérieur du fourreau (21).

13. Boîtier avec dispositif de fixation selon l'une des revendications 10, 11 ou 12 et selon les revendications 4 et 9, **caractérisé en ce que** au moins un crochet (35) de la ou des pattes de fixation peut coopérer avec une rainure de retenue formée par la base (22) et la rondelle d'appui (18).

14. Boîtier avec dispositif de fixation selon l'une des revendications précédentes, **caractérisé en ce que** la surface extérieure des extensions (26,27) présente des nervures axiales.

15. Boîtier avec dispositif de fixation selon l'une des revendications précédentes, **caractérisé en ce que** le levier (14) possède un ergot (19) susceptible de coopérer avec le moyen de verrouillage (38).

## Patentansprüche

1. Gehäuse mit Befestigungsvorrichtung, wobei die Befestigungsvorrichtung eine Hülse (21) aufweist, welche aus mindestens zwei Erweiterungen (26, 27) gebildet ist, die durch eine Nut (25) getrennt sind, eine Welle (12), deren Drehung die Ausdehnung der Hülse (21) variieren lässt, wobei die Drehung der Welle (12) mittels eines Hebels (14) ausgeführt wird, welcher fest mit der Welle (12) verbunden ist, **dadurch gekennzeichnet, dass** die Befestigungsvorrichtung ein Verriegelungsmittel (38) anfweist, das fest mit dem Gehäuse (1) verbunden ist.

2. Gehäuse mit Befestigungsvorrichtung nach Anspruch 1, **dadurch gekennzeichnet, dass** die Befestigungsvorrichtung (1) mit einer Befestigungszone (31) zusammenwirkt, welche aus einem ebenen Element (32) gebildet wird, das fest mit dem Gehäuse (1) verbunden ist, und eine Bohrung aufweist, deren Durchmesser gleich dem äußeren Durchmesser der Hülse (21) in Ruhestellung ist.

3. Gehäuse mit Befestigungsvorrichtung nach Anspruch 2, **dadurch gekennzeichnet, dass** der Durchmesser der Bohrung des ebenen Elements (32) mindestens zwei Vorsprünge (36a, 36b) aufweist, die fähig sind, mit der Nut (25) zusammenzuwirken.

4. Gehäuse mit Befestigungsvorrichtung nach Anspruch 2 oder 3, **dadurch gekennzeichnet, dass** die Befestigungszone (31) mindestens einen Befestigungslappen (33) besitzt, der einen Haken (35) aufweist.

5. Gehäuse mit Befestigungsvorrichtung nach einem der Ansprüche 2 bis 4, **dadurch gekennzeichnet, dass** die Befestigungszone (31) mindestens einen Haltelappen (34) aufweist.

6. Gehäuse mit Befestigungsvorrichtung nach einem der vorangegangenen Ansprüche, **dadurch gekennzeichnet, dass** die Welle (12) einen Nocken (17) aufweist.

7. Gehäuse mit Befestigungsvorrichtung nach Anspruch 6, **dadurch gekennzeichnet, dass** die Nut (25) eine größere Tiefe (p) zur Dicke (e) des Nockens (17) aufweist.

8. Gehäuse mit Befestigungsvorrichtung nach einem der vorangegangenen Ansprüche, **dadurch gekennzeichnet, dass** ein Ende der Welle (12) einen Ansatz (15) von einer kegelstumpfförmigen Form bildet, in dessen Rücksprung eine Sperr-Rille (16) ausgearbeitet wurde, wobei die gemeinsame Wand der Rille (16) und des Ansatzes (15) eine ebene Abstützoberfläche bildet.

9. Gehäuse mit Befestigungsvorrichtung nach einem der vorangegangenen Ansprüche, **dadurch gekennzeichnet, dass** die Welle (12) einen Abschnitt mit größerem Durchmesser aufweist, welcher eine Abstützscheibe (18) bildet.

10. Gehäuse mit Befestigungsvorrichtung nach einem der vorangegangenen Ansprüche, **dadurch gekennzeichnet, dass** die Erweiterungen (26, 27) der Hülse (21) durch eine Basis (22) getragen werden.

11. Gehäuse mit Befestigungsvorrichtung nach Anspruch 10, **dadurch gekennzeichnet, dass** die Nut (25) sich longitudinal von der Basis (22) zum freien Ende der Erweiterungen erstreckt.

12. Gehäuse mit Befestigungsvorrichtung nach Anspruch 10 oder 11, **dadurch gekennzeichnet, dass** jede Erweiterung (26, 27) an ihrem freien Ende eine Lippe (29) besitzt, welche sich radial nach innen von der Hülse (21) erstreckt.

13. Gehäuse mit Befestigungsvorrichtung nach einem der Ansprüche 10, 11 oder 12 und nach den Ansprüchen 4 und 9, **dadurch gekennzeichnet, dass** mindestens ein Haken (35) des/der Befestigungslappen mit einer Haltenut zusammenwirken kann, welche durch die Basis (22) und die Abstützscheibe (18) gebildet wird.

14. Gehäuse mit Befestigungsvorrichtung nach einem der vorangegangenen Ansprüche, **dadurch gekennzeichnet, dass** die äußere Oberfläche der Erweiterungen (26, 27) axiale Rippen aufweist.

15. Gehäuse mit Befestigungsvorrichtung nach einem der vorangegangenen Ansprüche, **dadurch gekennzeichnet, dass** der Hebel (14) einen Vorsprung (19) aufweist, der fähig ist, mit dem Verriegelungsmittel (38) zusammenzuwirken.

## Claims

1. Casing with a fixing device, the device having a sleeve (21) comprising at least two extensions (26, 27) separated by a slot (25), a shaft (12) whose rotation varies the expansion of the sleeve (21), the shaft (12) being made to rotate by means of a lever (14) integral with the shaft (12), **characterized in that** the fixing device has a locking means (38) integral with said casing (1).

2. Casing with a fixing device according to claim 1, **characterized in that** the fixing device (1) cooperates with a fixing area (31), formed by a flat element (32) integral with the casing (1) which has a bore whose diameter is equal to the external diameter of the sleeve (21) at rest.

3. Casing with a fixing device according to claim 2, **characterized in that** the diameter of the bore of the flat element (32) has at least two catches (36a, 36b) which are able to cooperate with the slot (25).

4. Casing with a fixing device according to claim 2 or 3, **characterized in that** the fixing area (31) has at least one fixing lug (33) which has a hook (35).

5. Casing with a fixing device according to one of claims 2 to 4, **characterized in that** the fixing area (31) has at least one retaining lug (34).

6. Casing with a fixing device, according to one of the preceding claims, **characterized in that** the shaft (12) has a cam (17).

7. Casing with a fixing device, according to claim 6, **characterized in that** the slot (25) has a depth (*p*) greater than the thickness (*e*) of the cam (17).

8. Casing with a fixing device according to one of the preceding claims, **characterized in that** one extremity of the shaft (12) forms an end (15), in the shape of a truncated cone behind which a stop groove (16) has been machined, the wall common to said groove (16) and the end (15) forming a flat bearing surface.

9. Casing with a fixing device according to one of the preceding claims, **characterized in that** the shaft (12) has one section which is larger in diameter forming a bearing collar (18).

10. Casing with a fixing device according to one of the preceding claims, **characterized in that** the extensions (26, 27) of sleeve (21) are supported by a base (22).

11. Casing with a fixing device according to claim 10, **characterized in that** the slot (25) extends longitudinally from the base (22) to the free end of the extensions.

12. Casing with a fixing device according to claim 10 or 11, **characterized in that** each extension (26, 27) has, at its free end, a lip (29) extending radially towards the inside of the sleeve (21).

13. Casing with a fixing device according to one of claims 10, 11, or 12 and according to claims 4 and 9, **characterized in that** at least one hook (35) of the fixing lug or lugs can cooperate with a retaining groove formed by the base (22) and the bearing collar (18).

14. Casing with a fixing device according to one of the preceding claims, **characterized in that** the external surface of the extensions (26, 27) has axial ribs.

15. Casing with a fixing device according to one of the preceding claims, **characterized in that** the lever (14) has a catch (19) which is able to cooperate with the locking means (38).
